# EUROPEAN PATENT APPLICATION

(11) **EP 2 928 050 A1**
(43) Date of publication of application: **07.10.2015**
(21) Application number: 13858744.9
(22) Date of filing: 21.10.2013
(51) Int. Cl.: H02K 11/00, H02P 29/00

(54) **MOTOR, CONTROL DEVICE AND MOTOR DRIVE DEVICE**

(30) Priority: 28.11.2012 JP 2012259290
(71) Applicant: Hitachi Automotive Systems, Ltd., Hitachinaka-shi, Ibaraki 312-8503 (JP)
(72) Inventor: IMANISHI Yuto, Tokyo 100-8280 (JP); MITSUI Toshisada, Hitachinaka-shi Ibaraki 312-8503 (JP); HOSHINO Katsuhiro, Hitachinaka-shi Ibaraki 312-8503 (JP); YOKOYAMA Atsushi, Tokyo 100-8280 (JP); YAMADA Hiroyuki, Hitachinaka-shi Ibaraki 312-8503 (JP)
(74) Representative: MERH-IP Matias Erny Reichl Hoffmann
(86) International application number: PCT/JP2013/078409
(87) International publication number: WO 2014/083963

(57) **Abstract**

In order to provide a motor capable of detecting a temperature of a magnet 21 embedded in a rotor 20 with a high degree of accuracy, the motor includes: a stator 25 equipped with a coil 24, a case 22 that secures the stator 25, the rotor 20 supported by the case 22 via bearings 23, and an internal air temperature sensor 17 that is attached to an inner surface of the case 22 via an internal-air-temperature-detection-point support member 18 and measures a temperature of internal air 27 which is air filling the inside of the case 22.

## Description

### TECHNICAL FIELD

The present invention relates to a motor drive device for a vehicle driving motor including a stator equipped with a coil and a rotor equipped with a magnet.

### BACKGROUND ART

Regarding a vehicle driving motor for an electric vehicle, there is a known motor drive device that prevents an excessive temperature rise of the motor to avoid burnout of a coil or heat demagnetization of a magnet. For example, an invention described in PTL 1 is designed to reduce the temperature of a coil or a magnet by reducing torque of a motor when the temperature of the coil or the magnet rises.

### CITATION LIST

### PATENT LITERATURE

PTL 1: Japanese Laid-Open Patent Publication No. 2008-109816

### SUMMARY OF INVENTION

### TECHNICAL PROBLEM

Regarding a motor including a stator equipped with a coil and a rotor equipped with a magnet, heat generation by the coil is caused by electrical resistance and its heating value varies depending on size of motor torque. On the other hand, heat generation by the magnet is caused by changes of a magnetic flux piercing through the magnet and its heating value varies depending on the size of the motor torque and rotational frequency of the motor. Therefore, in a case of the coil, as the size of the motor torque becomes larger, the heating value increases and a coil temperature becomes high. Furthermore, in a case of a magnet 21, when the size of the motor torque becomes larger or the rotational frequency of the motor becomes higher, the heating value increases and a magnet temperature becomes high.

Accordingly, the cause of heat generation and the operation are different between the coil and the magnet. So, it is impossible to accurately detect the temperature of a rotor equipped with the magnet and prevent an excessive increase of the temperature only by measuring the coil temperature.

Furthermore, the magnet is embedded in the rotor which is a rotary part, so that it is impossible to measure the temperature by directly attaching a temperature sensor to the rotor.

The present invention solves the above-described problem and its object is to enable the high-accuracy detection of the temperature of the rotor which has been conventionally difficult.

### SOLUTION TO PROBLEM

In order to solve the above-described problem, for example, structures described in claims are adopted. The present application includes a plurality of means for solving the above-described problem; and as one example of such means, the present invention is characterized by "including a stator equipped with a coil, a case that secures the stator, a rotor supported by the case via bearings, and an internal air temperature detection unit that detects a temperature of internal air which is air filling the inside of the case."

### ADVANTAGEOUS EFFECTS OF INVENTION

According to the present invention, the temperature of the rotor can be detected with a high degree of accuracy. Structures and advantageous effects other than those described above will be made clear by a description of embodiments below.

### BRIEF DESCRIPTION OF DRAWINGS

[Fig. 1] Fig. 1 is a diagram illustrating a schematic configuration of a motor drive device according to a first embodiment of the present invention;
[Fig. 2] Fig. 2 is a principal part sectional view illustrating a schematic configuration of a motor 2 according to the first embodiment of the present invention;
[Fig. 3] Fig. 3 is a characteristic diagram indicating a heat generating tendency of a coil 24 according to the first embodiment of the present invention;
[Fig. 4] Fig. 4 is a characteristic diagram indicating a heat generating tendency of a magnet 21 according to the first embodiment of the present invention;
[Fig. 5] Fig. 5 is a diagram illustrating flows of heat at each part of the motor 2 according to the first embodiment of the present invention;
[Fig. 6] Fig. 6 is a block diagram of a control calculation unit 8 according to the first embodiment of the present invention;
[Fig. 7] Fig. 7 is a flowchart illustrating operation of the control calculation unit 8 according to the first embodiment of the present invention;
[Fig. 8] Fig. 8 is a block diagram of a magnet temperature calculation unit 32 according to the first embodiment of the present invention;
[Fig. 9] Fig. 9 is a flowchart illustrating operation of the magnet temperature calculation unit 32 according to the first embodiment of the present invention;
[Fig. 10] Fig. 10 is a graph of estimated results by the magnet temperature calculation unit 32 according to the first embodiment of the present invention;
[Fig. 11] Fig. 11 is a principal part sectional view illustrating a schematic configuration of a motor 2 according to a second embodiment of the present invention;
[Fig. 12] Fig. 12 is a principal part sectional view illustrating a schematic configuration of a motor 2 according to a third embodiment of the present invention; and
[Fig. 13] Fig. 13 illustrates a schematic configuration of a motor drive device according to a fourth embodiment of the present invention.

### DESCRIPTION OF EMBODIMENTS

Embodiments for carrying out the present invention will be explained below with reference to drawings. The embodiments described below explain the present invention by taking, as an example, a case where the present invention is applied to a drive system of an electric car that uses an electric motor as a sole drive source for the car; however, the present invention can also be applied to a control device for electric motor vehicles such as railway vehicles or construction vehicles, and electric motor vehicles using engines, which are internal-combustion engines, and electric motors as vehicle drive sources, that are hybrid cars (passenger cars), freight vehicles such as hybrid trucks, omni-buses such as hybrid buses and the like, for example.

Furthermore, the following embodiments explain the present invention by taking, as an example, a case where the present invention is applied to a motor including a rotor equipped with a magnet; however, the invention is not limited to this example and the present invention can also be applied to a motor including a rotor which is not equipped with a magnet like an induction motor.

### <First Embodiment>

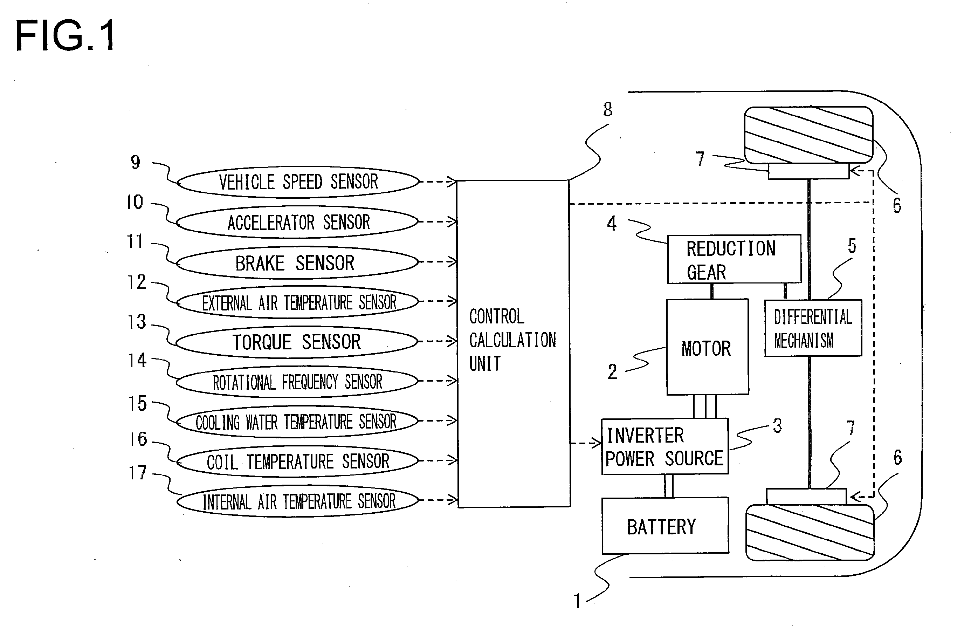

Fig. 1 is a diagram illustrating the configuration of an electric car (vehicle) drive system (hereinafter referred to as the motor drive device) according to a first embodiment. Incidentally, broken-line arrows in Fig. 1 represent signal flows. A vehicle includes: a battery 1 that is an energy source for the vehicle; a motor (an electric motor) 2 that electrically drives the vehicle; an inverter power source 3 that converts electric power between the battery 1 and the motor 2; and a control calculation unit 8 that controls the inverter power source 3, a braking device 7, and so on.

The inverter power source 3 converts direct-current power, which is supplied from the battery 1, into three-phase-alternating-current power by means of pulse width modulation (PWM) and supplies the three-phase-alternating-current power to the motor 2. The motor 2 converts electric energy, which is supplied as the three-phase-alternating-current power from the inverter power source 3, into kinetic energy. Kinetic power generated as the kinetic energy by the motor 2 is transmitted to a reduction gear 4, the speed is reduced by a gear-type speed reduction mechanism inside this reduction gear 4, and the kinetic power is then transmitted to right and left drive wheels 6 via a differential mechanism 5 and becomes a driving force to drive the vehicle.

The braking device 7 that puts brakes on the vehicle is provided near the drive wheels 6. The braking device 7 includes a hydraulic booster and a hydraulic control force generated by this hydraulic booster presses the drive wheels 6 to generate a frictional force. As a result, the kinetic energy is converted into thermal energy to put the brakes on the vehicle. The braking device 7 can reduce a rotational frequency of the motor 2 by putting the brakes on the vehicle.

Referring to Fig. 1, the control calculation unit 8 is composed of a CPU, a memory, and so on and controls the motor 2 and the braking device 7 by executing a motor control program described later. The control calculation unit 8 can change torque generated by the motor 2 and regenerative electric power to charge the battery 1 by sending a command to the inverter power source 3 and changing the size of the electric current applied to the motor 2 and frequency of an alternating current. Furthermore, the control calculation unit 8 can change the braking force generated by the braking device 7 by sending a command to the braking device 7 to change the frictional force generated at the drive wheels 6 (a braking force command described later).

Referring to Fig. 1, the control calculation unit 8 is connected to, for example, a vehicle speed sensor 9 which detects a speed of the vehicle, an accelerator sensor 10 which detects an accelerator pedal operation amount (a manipulated variable of an accelerator pedal), a brake sensor 11 which detects a brake pedal operation amount (a manipulated variable of a brake pedal), an external air temperature sensor 12 which detects an external air temperature, a torque sensor 13 which detects torque of the motor 2, a rotational frequency sensor 14 which detects rotational frequency of the motor 2, a cooling water temperature sensor 15 which detects a temperature of cooling water (coolant) 26 described later for the motor 2, a coil temperature sensor 16 which detects a temperature of a coil 24 described later for the motor 2, and an internal air temperature sensor 17 which detects a temperature of internal air 27 described later in the motor 2.

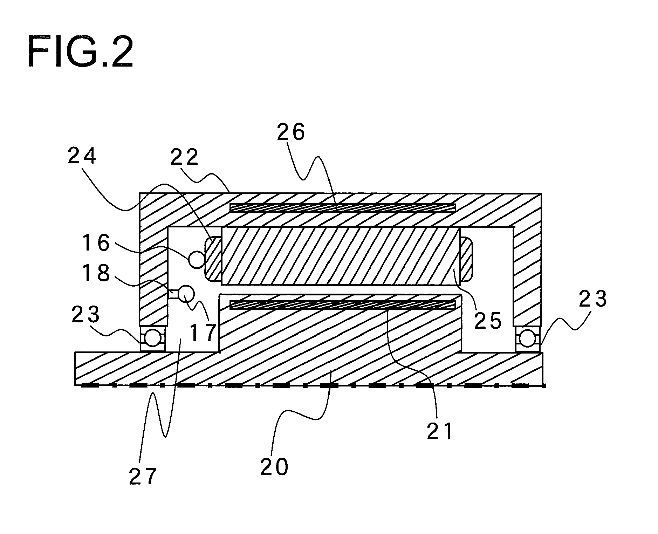

Fig. 2 is a sectional view illustrating the configuration of the motor 2. The motor 2 is an IPM (Interior Permanent Magnet) motor and a magnet 21 is embedded in a rotor 20. Both ends of the rotor 20 are supported by bearings 23 provided at a case 22. A stator 25 equipped with a coil 24 is secured to an inner surface of the case 22. When an alternating current is applied to the coil 24 and a rotating magnetic field is thereby generated, the rotor 20 in which the magnet 21 is embedded rotates. As a result, the electric energy supplied to the motor 2 is converted to the kinetic energy.

The motor 2 generates heat according to an operational status. Accordingly, when the temperature of the motor rises excessively due to the heat generation, there is a possibility that varnish which is applied to the coil 24 may deteriorate. Additionally, the magnet 21 (such as a magnet using rare earth metal) has the property of being irreversibly demagnetized when becoming subject to a large reverse magnetic field at high temperature. Therefore, it is necessary to protect the coil 24 and the magnet 21 against an excessive temperature rise.

Cooling water 26 flows in the case 22 in order to cool the motor 2. The temperature of the motor 2 is reduced by transmitting the heat of the case 22 to this cooling water 26. A coil temperature sensor 16 is attached to the coil 24 in order to monitor the temperature of the coil 24.

Furthermore, an internal air temperature sensor 17 is attached via an internal-air-temperature-detection-point support member 18, which is composed of, for example, a ceramic structure, to the inner surface of the case 22 in order to measure the temperature of internal air 27, which is air filling the inside of the case 22, and have a magnet temperature estimation unit 32, which is included in the control calculation unit 8 described later, refer to the measured temperature. The internal air temperature sensor 17 does not directly contact the case 22 by interposing this internal-air-temperature-detection-point support member 18 between them.

Incidentally, the ceramic structure is used as the internal-air-temperature-detection-point support member 18 in this embodiment; however, instead of this, the internal-air-temperature-detection-point support member 18 may be a signal line for transmitting measurement information of the internal air temperature sensor 17 and this signal line may be extended to separate the internal air temperature sensor 17 from the inner surface of the case 22 for a certain distance, thereby attaching the internal air temperature sensor 17 to the inner surface of the case 22 in a manner such that the internal air temperature sensor 17 does not directly contact the case 22.

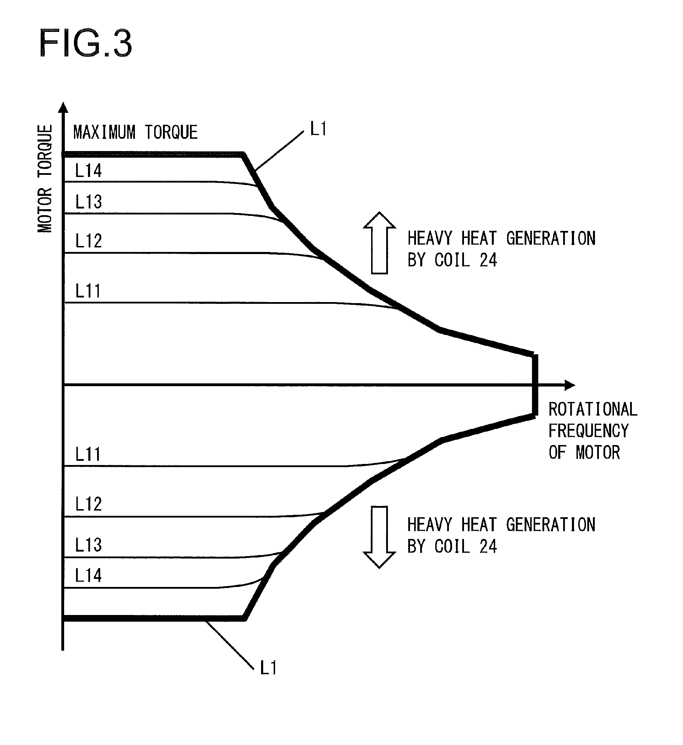

When the alternating current is applied to the coil 24, the coil 24 generates heat due to electrical resistance. Fig. 3 is a diagram for explaining a heat generating tendency of the coil 24 and indicates the heat generating tendency of the coil 24 (lines L11 to L14) along with a curved line L1 indicative of a rotational frequency and torque property (maximum torque) of the motor 2. Referring to Fig. 3, a vertical axis represents motor torque, a horizontal axis represents the rotational frequency of the motor, and line L1 which is a bold line represents the maximum torque of the motor 2 at normal temperature. The maximum torque L1 represents motor torque which can be output at respective rotational frequencies of the motor and the motor 2 is used in an area inside the maximum torque (area surrounded by line L1).

Each line L11 to L14 which represents the heat generating tendency is a curved line connecting operating points of the same heating value (heat generation amount). The alternating current applied to the coil 24 changes generally according to size (absolute value) of the motor torque. Accordingly, the heating value of the coil 24 increases according to the size of the motor torque and becomes larger in the order of L11 < L12 < L13 < L14. If the motor torque is the same, there is little change in the heating value even if the rotational frequency changes, as can be seen in Fig. 3. L11 to L14 in a negative motor torque range indicate heating values when the motor 2 is in regenerative operation.

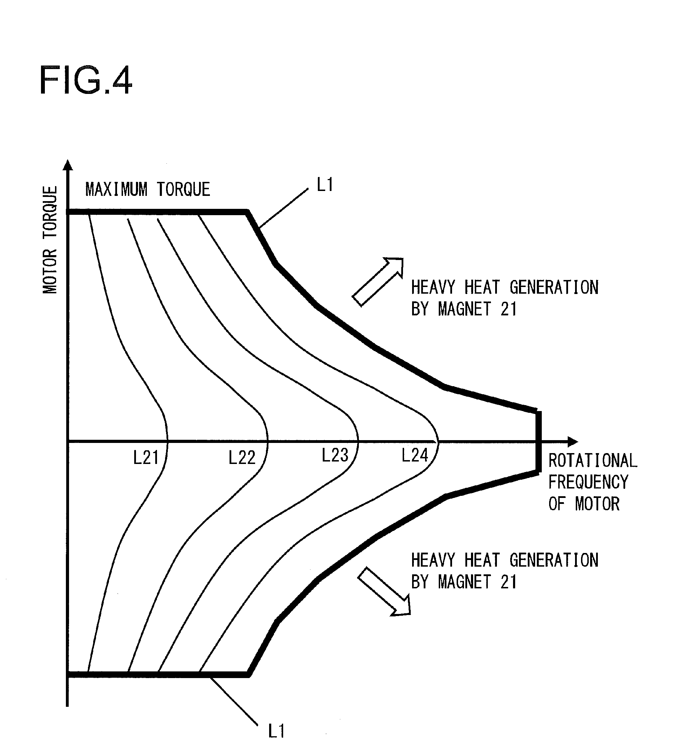

On the other hand, the magnet 21 generates heat according to changes of a magnetic flux piercing through the magnet 21. Fig. 4 is a diagram for explaining the heat generating tendency of the magnet 21 and indicates the heat generating tendency (curved lines L21 to L24) of the magnet 21 along with the curved line L1 indicative of the maximum torque of the motor 2. A density of the magnetic flux formed by the coil 24 increases according to the size of the motor torque. Furthermore, when the rotational frequency of the motor 2 becomes high, the magnetic flux changes sharply. Therefore, the heating value of the magnet 21 changes according to the size of the motor torque and the rotational frequency of the motor and the shapes of the curved lines L21 to L24 connecting operating points of the same heating value become complicated as shown in Fig. 4. Referring to Fig. 4, the heating value increases in the order of L21 < L22 < L23 < L24.

The heating value of the coil 24 changes according to the size of the motor torque (Fig. 3), while the heating value of the magnet 21 changes according to the size of the motor torque and the rotational frequency of the motor as described above (Fig. 4). Accordingly, regarding the coil 24, when the size (absolute value) of the motor torque increases, the heating value increases and the coil temperature becomes high. Furthermore, in a case of the magnet 21, when the size of the motor torque increases or the rotational frequency of the motor increases, the heating value increases and the magnet temperature becomes high.

In this way, the operating points of heavy heat generation are different between the coil 24 and the magnet 21 and an excessive temperature rise of the magnet 21 cannot be prevented only by measuring the temperature of the coil 24 by using the coil temperature sensor 16. Furthermore, since the coil 24 is provided on the stator 26 which is a non-rotary part, the coil temperature sensor 16 can be easily attached; however, since the magnet 21 is embedded in the rotor 20 which is a rotary part, it is difficult to directly attach the temperature sensor. Therefore, a means for estimating the temperature with a high degree of accuracy without providing the temperature sensor directly on the magnet 21 is required in order to prevent the excessive temperature rise of the magnet 21.

So, in this embodiment, the control calculation unit 8 is designed to calculate the temperature of the magnet 21 based on the heat generation of the motor 2 calculated from the operational status of the motor 2. As a result, the temperature of the magnet 21 which is embedded in the rotary part can be estimated without providing the magnet 21 with the sensor for detecting the temperature. Furthermore, accuracy to estimate the temperature of the magnet 21 is enhanced by using values detected by the coil temperature sensor 16 and the internal air temperature sensor 17.

The internal air temperature sensor 17 is attached to the case 22 via the internal-air-temperature-detection-point support member 18 as described above. The temperature of the internal air 27 can be measured highly accurately and the temperatures of the rotor 20 and the magnet 21 can be estimated more highly accurately by providing a space between the internal air temperature sensor 17 and the case 22 without having them directly in contact with each other.

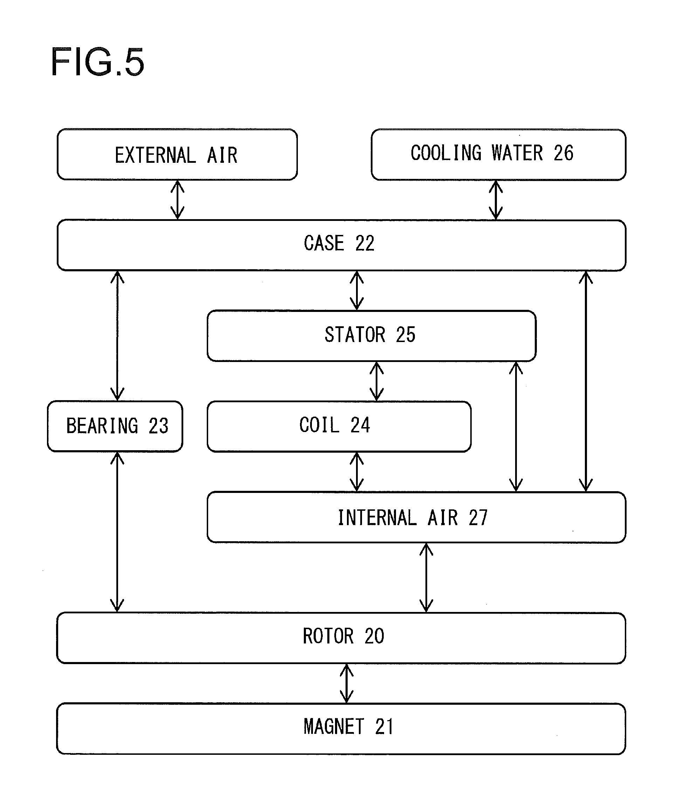

Fig. 5 shows heat flows of the motor 2 in this embodiment. Referring to Fig. 5, regarding the case 22, flows of heat exist between the case 22 and the external air, the bearings 23, the stator 25, the cooling water 26, and the internal air 27, respectively (heat is transmitted between them respectively).

Regarding the bearings 23, flows of heat exist between the bearings 23 and the rotor 20 and the case 22, respectively. Regarding the stator 25, flows of heat exist between the stator 25 and the case 22, the coil 24, and the internal air 27, respectively. Regarding the coil 24, flows of heat exist between the coil 24 and the stator 25 and the internal air 27, respectively. Regarding the internal air 27, flows of heat exist between the internal air 27 and the rotor 20, the case 22, the coil 24, and the stator 25, respectively. Regarding the rotor 20, flows of heat exist between the rotor 20 and the magnet 21, the bearing 23, and the internal air 27, respectively. Regarding the magnet 21, a flow of heat exists between the magnet 21 and the rotor 20.

In this embodiment, the temperatures of the rotor 20 and the magnet 21 are calculated by calculating the heat flows of the motor 2 based on the heat generated by the motor 2, which is calculated from the operational status of the motor 2, the relationship of heat flows of the motor 2 as illustrated in Fig. 5, a value detected by the external air temperature sensor 13, and a value detected by the cooling water temperature sensor 15.

The temperature of each part of the motor 2 is determined by inputs and outputs of heat generation by each part of the motor 2, heat transfer at each part of the motor 2, heat radiation from the case 22 to the external air, and heat radiation from the case 22 to the cooling water 26. Under this circumstance, an amount of heat transfer between the respective parts of the motor 2 is determined by temperature differences between the respective parts. Furthermore, an amount of heat radiation from the case 22 to the external air is determined by a temperature difference between the case 22 and the external air. An amount of heat radiation from the case 22 to the cooling water 26 is determined by a temperature difference between the case 22 and the cooling water 26.

Therefore, the temperature of each part of the motor 2, that is, the rotor 20 and the magnet 21, can be calculated from the heating value of each part of the motor 2, the temperature of the external air, and the temperature of the cooling water according to the flows of heat in Fig. 5. Since the heating value of each part of the motor 2 is determined generally by the motor torque and the rotational frequency of the motor, the temperatures of the rotor 20 and the magnet 21 can be estimated by calculating them based on the external air temperature which is actually measured by the external air temperature sensor 13, the cooling water temperature which is actually measured by the cooling water temperature sensor 15, and the motor torque and rotational frequency of the motor, which are the drive status of the motor 2, according to the flows of heat in Fig. 5. Size and frequency of the aforementioned alternating current may be used as the drive status of the motor 2.

Now, since heat capacity of the motor 2 is large, the temperature of the motor 2 changes slowly relative to driving time of a general vehicle. Therefore, if an error occurs in the calculation process of heat flows, its influence continues for a long period of time, thereby degrading estimate accuracy of the temperatures of the rotor 20 and the magnet 21. So, in this embodiment, the estimate accuracy of the magnet temperature 21 is enhanced by using values detected by the coil temperature sensor 16 and the internal air temperature sensor 17.

Specifically speaking, in this embodiment, when the internal air temperature sensor 17 is used to measure the temperature of the internal air 27 and there is a difference between the calculated temperature of the internal air 27, which is calculated according to the flows of heat in Fig. 5, and the temperature measured by the internal air temperature sensor 17, the calculated temperature of each part shown in Fig. 5 is corrected according to this difference.

For example, when the calculated temperature of the internal air 27 is higher than the measured temperature, there is a high possibility that the calculated temperature of each part including the rotor 20 might be also calculated to be higher than its actual temperature. So, the calculated temperature of each part including the rotor 20 is corrected to a lower temperature. As a result, high accuracy of the estimated temperatures of the rotor 20 and the magnet 21 is achieved. Since the rotor 20 directly transmits and receives heat to and from the internal air 27 as shown in Fig. 5, the temperature of the rotor 20 can be corrected quickly by using the temperature measured by the internal air temperature sensor 17.

Additionally, air has lower specific heat than that of metals and the temperature of the air easily changes. So, when the temperature of the rotor 20 changes, the temperature of the internal air 27 changes more quickly than, for example, the stator 25 and the case 22. Therefore, the temperatures of the rotor 20 and the magnet 21 can be corrected quickly by using the internal air temperature sensor 17 which measures the temperature of the internal air 27.

Furthermore, the temperature of the coil 24 tends to become the highest in the motor 2 and the temperature of the internal air 27 can be easily changed due to the temperature rise of the coil 24. Consequently, when the coil temperature sensor 16 is used to measure the temperature of the coil 24 and there is a difference between the calculated temperature of the coil 24 and the temperature measured by the coil temperature sensor 16, the temperature of each part including the internal air 27 is corrected according to this difference.

For example, when the calculated temperature of the coil 24 is higher than its measured temperature, there is a high possibility that the temperature of the internal air 27 is calculated to be higher than its actual temperature due to the influence of the coil 24. So, the calculated temperature of each part including the internal air 27 is corrected to a lower temperature. As a result, the influence of the coil 24 can be easily separated from among changes of the temperature of the internal air 27 and the temperatures of the rotor 20 and the magnet 21 can be estimated with a high degree of accuracy.

Then, when the thus-estimated temperature of the magnet 21 and the temperature detected by the coil temperature sensor 16 exceed a predetermined temperature, a command is issued to the inverter power source 3 to reduce the torque and rotational frequency of the motor 2 in this embodiment, thereby preventing an excessive temperature rise of the magnet 21 and the coil 24.

The operating points which tend to increase the temperature are different between the coil 24 and the magnet 21 as described above. Therefore, desired operations for the coil 24 and the magnet 21 to reduce the temperatures are different. So, in the first embodiment, the excessive temperature rise of the coil 24 and the magnet 21 is prevented by performing different protection operations between a case where the temperature of the coil 24 is high and a case where the temperature of the magnet 21 is high.

Specifically speaking, the heating value, that is, the motor torque may be limited according to the coil temperature in order to prevent the excessive temperature rise of the coil 24. When the coil temperature is comparatively low, permissible motor torque is comparatively large; and when the coil temperature is equal to or lower than a certain temperature, the motor torque up to the maximum torque in Fig. 3 is permissible. On the other hand, when the coil temperature is comparatively high, the permissible motor torque becomes small.

Meanwhile, the heating value of the magnet 21 changes according to the size (absolute value) of the motor torque and the rotational frequency of the motor and a line having a constant heating value takes a form like each of the lines L21 to L24 shown in Fig. 4. In order to prevent the excessive temperature rise of the magnet 21, it is necessary to limit the heating value, that is, the motor torque and the rotational frequency of the motor according to the temperature of the magnet 21.

The heat generated by the magnet 21 increases according to the size (absolute value) of the motor torque and the rotational frequency of the motor as described above. Therefore, when the rotational frequency of the motor is high even if the motor torque is reduced, there is a possibility that temperature of the magnet 21 may increase. For example, when a vehicle is running on a downhill grade, that is, when a load to increase the rotational frequency of the motor is imposed on the rotor 20, a vehicle speed, that is, the rotational frequency of the motor increases even if the motor torque is limited to zero. Under this circumstance, the heat generated by the magnet 21 increases and the magnet temperature continues to increase. Also, if an attempt is made to reduce the rotational frequency of the motor by adjusting the motor torque in this case, it is necessary to increase the motor torque on the regeneration side. In this case as well, the heat generated by the magnet 21 increases.

In this embodiment, when the rotational frequency of the motor increases even if the control calculation unit 8 sends a command to the inverter power source 3 to make the motor torque zero, the control calculation unit 8 sends a command to the braking device 7 to reduce the vehicle speed, that is, the rotational frequency of the motor. As a result, it is possible to reduce the rotational frequency of the motor and avoid the excessive temperature rise of the magnet 21.

Furthermore, if the control calculation unit 8 detects a failure of the internal air temperature sensor 17, the control calculation unit 8 corrects the calculated temperature by using only the value detected by the coil temperature sensor 16 without using the value detected by the internal air temperature sensor 17. Firstly, the control calculation unit 8 calculates the temperatures of the rotor 20 and the magnet 21 by calculating the flows of heat at the motor 2 based on the heat generated by the motor 2 which is calculated from the operational status of the motor 2, the heat flow relationship of the motor 2 as show in Fig. 5, the value detected by the external air temperature sensor 12, and the value detected by the cooling water temperature sensor 15 in the same manner as in a case where the internal air temperature sensor 17 is in normal operation. Next, the coil temperature sensor 16 is used to measure the temperature of the coil 24; and when there is a difference between the calculated temperature of the coil 24 and the temperature measured by the coil temperature sensor 16, the temperature of each part including the internal air 27 is corrected according to this difference. As a result, even if the internal air temperature sensor 17 fails, it is possible to continue estimating the temperatures of the rotor 20 and the magnet 21.

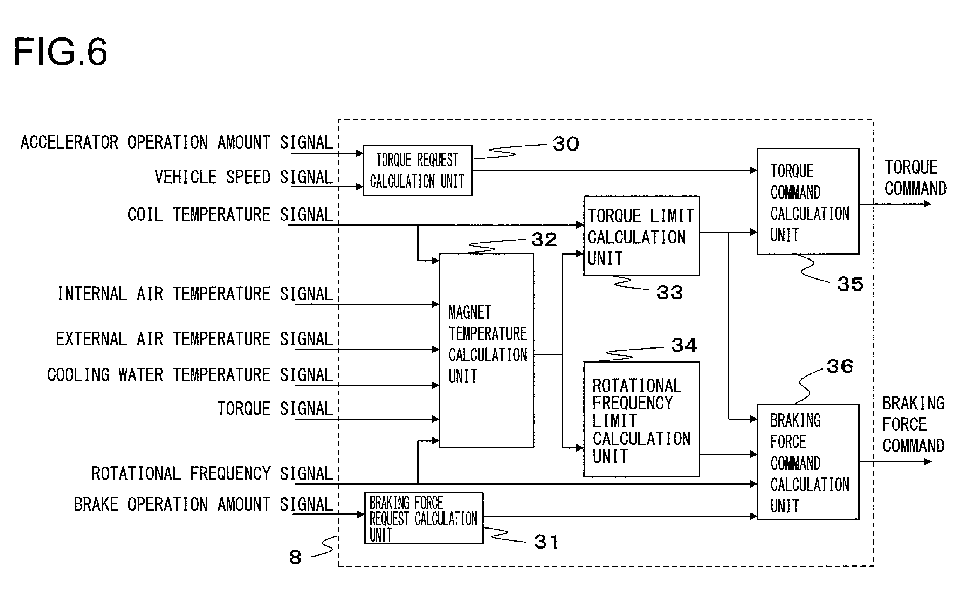

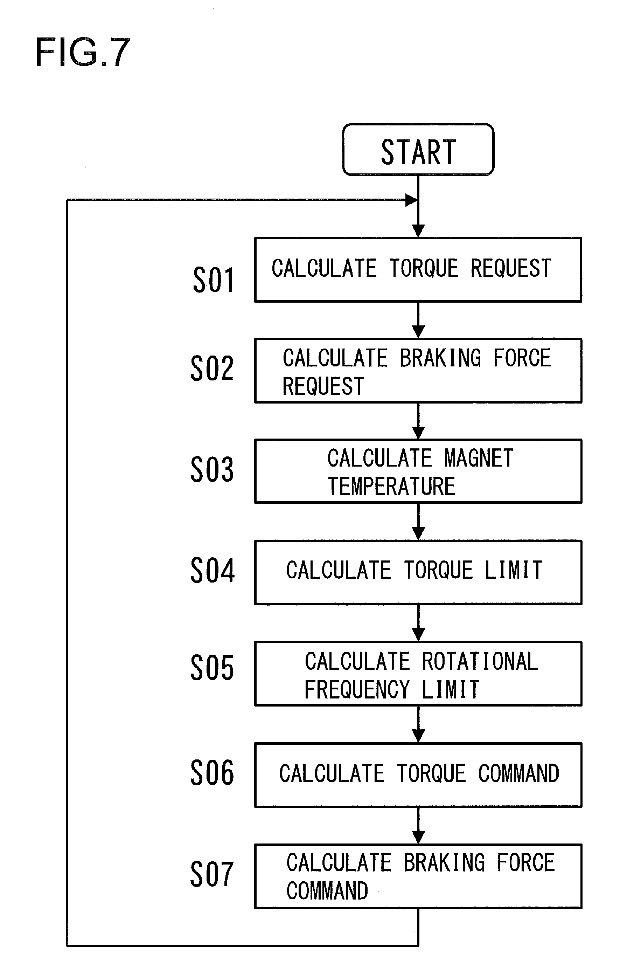

Fig. 6 is a block diagram illustrating the configuration of the control calculation unit 8 according to the first embodiment. Fig. 7 is a flowchart illustrating the operation of the control calculation unit 8 according to the first embodiment. Motor control operation according to the first embodiment will be explained below with reference to Fig. 6 and Fig. 7. A CPU of the control calculation unit 8 achieves motor control blocks illustrated in Fig. 6 in a software form by a microcomputer; and while an ignition key switch (not shown in the drawing) of the vehicle is turned on, the CPU repeats executing a motor control program shown in Fig. 7.

The control calculation unit 8 is provided with a torque request calculation unit 30, a braking force request calculation unit 31, a magnet temperature calculation unit 32, a torque limit calculation unit 33, a rotational frequency limit calculation unit 34, a torque command calculation unit 35, and a braking force command calculation unit 36, respectively. The operation of each unit will be explained below.

In step S01, the torque request calculation unit 30 calculates a torque request of the motor 2 based on a vehicle speed signal input from the vehicle speed sensor 9 and an accelerator operation amount signal (a signal according to a step-in quantity of an accelerator pedal) input from the accelerator sensor 10. Specifically speaking, since the accelerator operation amount of the accelerator pedal is proportionate to an output request as the vehicle, the accelerator operation amount is converted into the output request. Then, a driving force request of the vehicle, that is, the torque request of the motor 2 is calculated by dividing that output request by the vehicle speed.

In step S02, the braking force request calculation unit 31 calculates a braking force request of the braking device 7 based on a brake operation amount signal (a signal according to a step-in quantity of a brake pedal) input from the brake sensor 11. Since the brake operation amount of the brake pedal is proportionate to a braking force request as the vehicle, the brake operation amount is converted into the braking force request. Incidentally, the braking force request is converted into a value corresponding to the motor torque and operates to reduce the speed of the vehicle, so that it becomes a negative value.

In step S03, the magnet temperature calculation unit 32 calculates the estimated temperature of the magnet 21 based on a temperature signal of the coil 24 which is input from the coil temperature sensor 16, a temperature signal of the internal air 27 which is input from the internal air temperature sensor 17, a temperature signal of the external air which is input from the external air temperature sensor 12, a temperature signal of the cooling water 26 which is input from the cooling water temperature sensor 15, a torque signal of the motor 2 which is input from the torque sensor 13, and a rotational frequency signal of the motor 2 which is input from the rotational frequency sensor 14.

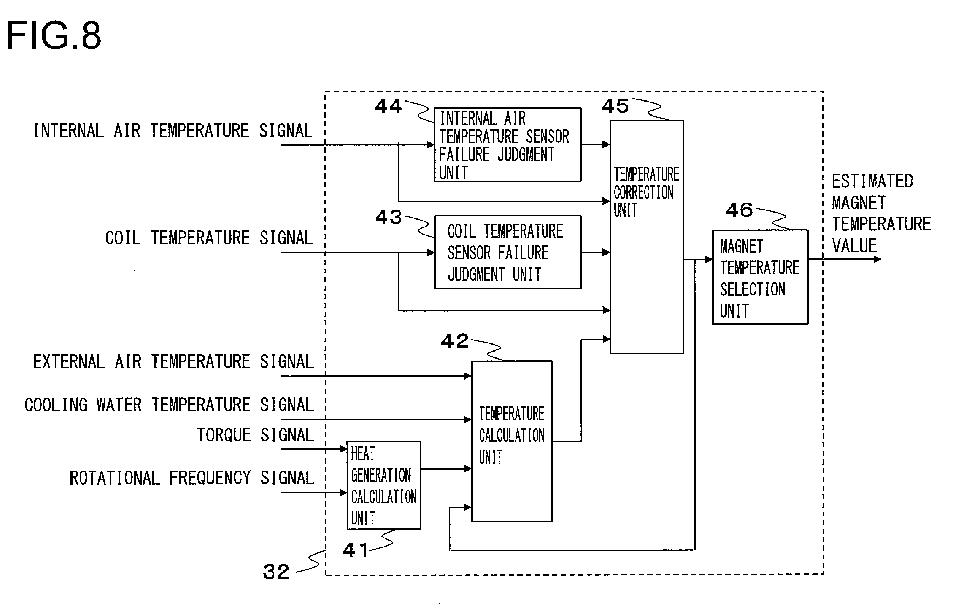

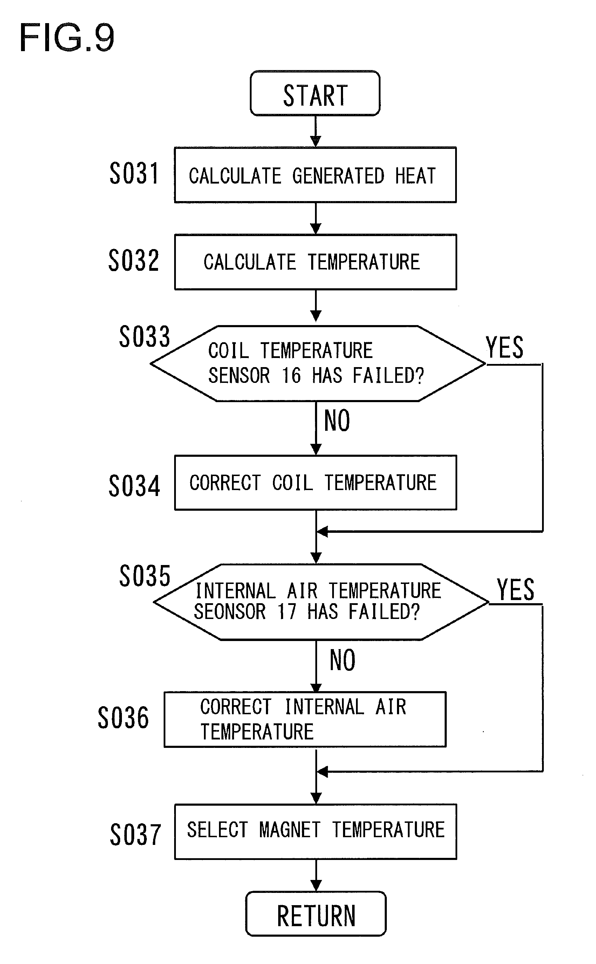

Now, Fig. 8 is a block diagram illustrating the detailed configuration of the magnet temperature calculation unit 32 and Fig. 9 is a flowchart illustrating the detailed operation of the magnet temperature calculation unit 32. Referring to Fig. 8, the magnet temperature calculation unit 32 is provided with a heat generation calculation unit 41, a temperature calculation unit 42, a coil temperature sensor failure judgment unit 43, an internal air temperature sensor failure judgment unit 44, a temperature correction unit 45, and a magnet temperature selection unit 46, respectively. The operation of each unit will be explained below.

Referring to Fig. 9, in step S031, the heat generation calculation unit 41 calculates the heating value of each part of the motor 2 (each part such as the rotor 20, the magnet 21, the bearings 23, the coil 24, and the stator 25) based on the motor torque which is input from the torque sensor 13 and the rotational frequency of the motor which is input from the rotational frequency sensor 14. The size and frequency of the alternating current which is input from the inverter power source 3 are generally determined relative to the motor torque and the rotational frequency of the motor. Accordingly, the heating value of each part of the motor 2 can be calculated from the motor torque and rotational frequency of the motor which are the drive status of the motor 2. The correspondence relationship between the motor torque and rotational frequency of the motor and the heating value of each part of the motor 2 is stored as a numerical map in a memory included in the control calculation unit 8. In step S031, the heating value of each part of the motor 2 is calculated by searching this numerical map.

In step S032, the temperature calculation unit 42 calculates a current temperature of each part of the motor 2 based on the external air temperature which is input from the external air temperature sensor 12, the cooling water temperature which is input from the cooling water temperature sensor 15, the heating value of each part of the motor 2 which is calculated by the heat generation calculation unit 41, and a corrected temperature of each part of the motor 2 in the previous step, which is calculated by the temperature correction unit 45 described later.

The temperature of each part of the motor 2 is determined as described earlier by inputs and outputs of heat generation by each part of the motor 2, heat transfer at each part of the motor 2, heat radiation from the case 22 to the external air, and heat radiation from the case 22 to the cooling water 26. Under this circumstance, an amount of heat transfer between the respective parts of the motor 2 is determined by temperature differences between the respective parts. Furthermore, an amount of heat radiation from the case 22 to the external air is determined by a temperature difference between the case 22 and the external air. An amount of heat radiation from the case 22 to the cooling water 26 is determined by a temperature difference between the case 22 and the cooling water 26. Therefore, the current temperature of each part of the motor 2 can be calculated from the heating value of each part of the motor 2, the external air temperature, the cooling water temperature, and the temperature of each part of the motor 2 in the previous step.

In step S033, the coil temperature sensor failure judgment unit 43 judges whether the coil temperature sensor 16 has failed or not. For example, a thermistor is used as the coil temperature sensor 16. When the thermistor is disconnected, electrical resistance increases rapidly. Therefore, a failure caused by the disconnection of the thermistor can be detected by monitoring the electrical resistance. In this way, whether the coil temperature sensor 16 has failed or not is judged. If it is determined that the coil temperature sensor 16 has not failed, NO is determined for the judgment in step S033 and the processing proceeds to step S034. On the other hand, if it is determined in step S033 that the coil temperature sensor 16 has failed, the processing proceeds to step S035.

In step S034, the temperature correction unit 45 compares the estimated temperature of the coil 24 with the measured temperature of the coil 24 which is input from the coil temperature sensor 16, among the temperatures of the respective parts of the motor 2, which are calculated by the temperature calculation unit 42. When the estimated temperature is higher than the measured temperature, it is determined that the temperature of each part of the motor 2 is calculated to be higher than its actual temperature, and the estimated temperature of each part of the motor 2 is corrected to a lower temperature. If the estimated temperature is lower than the measured temperature, it is determined that the temperature of each part of the motor 2 is calculated to be lower than its actual temperature, and the estimated temperature of each part of the motor 2 is corrected to a higher temperature.

In step S035, the internal air temperature sensor failure judgment unit 44 judges whether the internal air temperature sensor 17 has failed or not. The failure judgment of the internal air temperature sensor 17 is also performed in the same manner as the aforementioned failure judgment of the coil temperature sensor 16. Specifically speaking, when a thermistor is used as the internal air temperature sensor 17, its electrical resistance is monitored and a failure caused by disconnection of the thermistor is detected. If it is determined that the internal air temperature sensor 17 has not failed, NO is determined for the judgment in step S035 and the processing proceeds to step S036. On the other hand, if it is determined in step S035 that the internal air temperature sensor 17 has failed, the processing proceeds to step S037.

In step S036, the temperature correction unit 45 compares the estimated temperature of the internal air 27 with the measured temperature of the internal air 27 which is input from the internal air temperature sensor 17, among the estimated temperatures of the respective parts of the motor 2. When the estimated temperature is higher than the measured temperature, it is determined that the temperature of each part of the motor 2 is calculated to be higher than its actual temperature, and the estimated temperature of each part of the motor 2 is corrected to a lower temperature. If the estimated temperature is lower than the measured temperature, it is determined that the temperature of each part of the motor 2 is calculated to be lower than its actual temperature, and the estimated temperature of each part of the motor 2 is corrected to a higher temperature.

In step S037, the magnet temperature selection unit 46: selects the temperature of the magnet 21 from the estimated corrected temperatures of the respected parts of the motor 2, which are calculated by the temperature calculation unit 42 when the coil temperature sensor 16 and the internal air temperature sensor 17 have not failed; and outputs the selected temperature to the torque limit calculation unit 33 and the rotational frequency limit calculation unit 34 described later.

Referring back to Fig. 7, in step S04, the torque limit calculation unit 33 calculates a torque limit for protecting the coil 24 and the magnet 21 against the excessive temperature rise based on the temperature of the coil 24 which is input from the coil temperature sensor 16 and the estimated temperature of the magnet 21 which is input from the magnet temperature calculation unit 32. Incidentally, the correspondence relationship between the temperature of the coil 24 and the temperature of the magnet 21 and the torque limit is stored as a numerical map in the memory included in the control calculation unit 8. In step S04, the torque limit is calculated by searching this numerical map. The torque limit is a positive number, limits the motor torque to the value equal to or less than the torque limit at power running, and limits the motor torque to the value equal to or more than a positive/negative inverted value of the torque limit at regenerating.

In step S05, the rotational frequency limit calculation unit 34 calculates a rotational frequency limit for protecting the magnet 21 against the excessive temperature rise based on the estimated temperature of the magnet 21 which is input from the magnet temperature calculation unit 32. Incidentally, the correspondence relationship between the temperature of the magnet 21 and the rotational frequency limit is stored as a numerical map in the memory included in the control calculation unit 8. In step S05, the rotational frequency limit is calculated by searching this numerical map.

In step S06, the torque command calculation unit 35 calculates a torque command to be sent to the inverter power source 3 based on requested torque of the motor 2, which is input from the torque request calculation unit 30, and a torque limit of the motor 2 which is input from the torque limit calculation unit 33. The torque limit is a positive number, limits the torque request to the value equal to or less than the torque limit at power running, and limits the torque request to the value equal to or more than a positive/negative inverted value of the torque limit at regenerating. When the torque request is equal to or less than the torque limit at power running, the torque request is set as the torque command. If the torque request is equal to or more than the torque limit at power running, the torque limit is set as the torque command. When the torque request is equal to or more than the torque limit at regenerating, the torque request is set as the torque command. When the torque request is equal to or less than the torque limit at regenerating, the torque limit is set as the torque command.

In step S07, the braking force command calculation unit 36 calculates a braking force command to be sent to the braking device 7 based on a braking force request for the braking device 7 which is input from the braking force request calculation unit 31, the torque limit of the motor 2 which is input from the torque limit calculation unit 33, the rotational frequency signal of the motor 2 which is input from the rotational frequency sensor 14, and the rotational frequency limit of the motor 2 which is input from the rotational frequency limit calculation unit 34. When the rotational frequency of the motor increases even though the torque limit is zero, a command value that makes the rotational frequency of the motor equal to or less than the rotational frequency limit is set as the braking force command. In cases other than above, the braking force request is set as the braking force command. As a result, it is possible to reduce the rotational frequency of the motor and avoid the excessive temperature rise of the magnet 21.

The first embodiment is designed as described above so that the magnet temperature calculation unit 32, the torque limit calculation unit 33, and the rotational frequency limit calculation unit 34 are provided as shown in Fig. 6 to estimate the temperature of the magnet 21, output such a torque command as to make the motor torque equal to or less than the torque limit by the torque limit calculation unit 33, and output such a braking force command as to make the rotational frequency of the motor equal to or less than the rotational frequency limit by the rotational frequency limit calculation unit 34. So, it is possible to prevent the excessive rise of the temperature of the coil 24 and the temperature of the magnet 21.

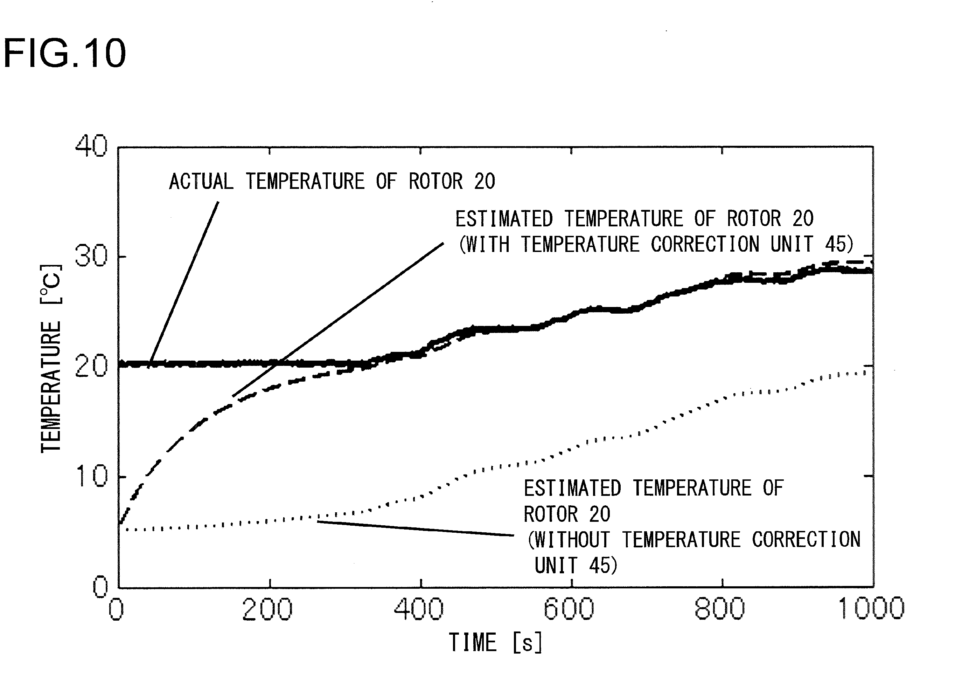

Fig. 10 shows results of comparison between an actual temperature of the rotor 20 and the temperature estimated by the magnet temperature calculation unit 32. A solid line represents the actual temperature of the rotor 20; a broken line represents a case where the estimated temperature of the rotor 20 by the magnet temperature calculation unit 32 is corrected by the temperature correction unit 45; and a dotted line represents a case where the estimated temperature of the rotor 20 by the magnet temperature calculation unit 32 is not corrected by the temperature correction unit 45 (corresponding to a case where the coil temperature sensor 16 and the internal air temperature sensor 17 have failed). In the case where the correction by the temperature correction unit 45 is performed, estimate errors of the temperature of the rotor 20 are reduced as compared to the case where the correction by the temperature correction unit 45 is not performed.

Furthermore, even if the internal air temperature sensor 17 has failed, temperature information of each part of the motor can be calculated based on the temperature detected by the coil temperature sensor 16 and the drive status of the motor, that is, the external air temperature signal, the cooling water temperature signal, the torque signal, and the rotational frequency signal.

### <Second Embodiment>

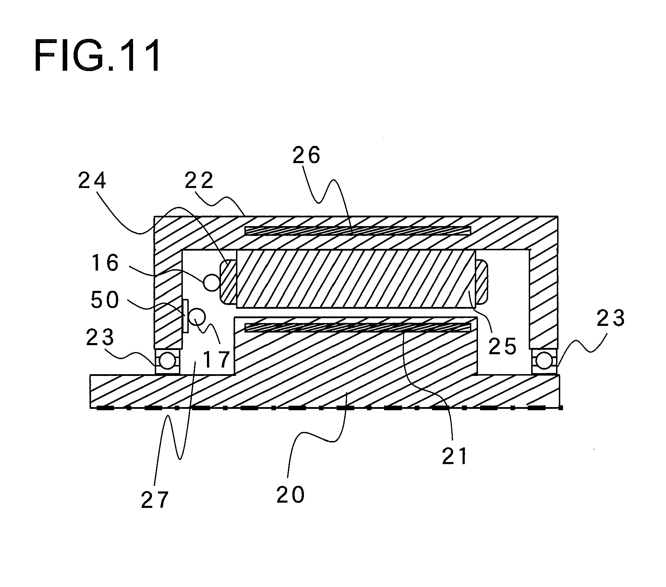

Fig. 11 is a diagram illustrating a schematic configuration of a motor 2 according to a second embodiment of the present invention. In the second embodiment, part of the configuration of the aforementioned first embodiment (the configuration of the motor 2) is changed. The same reference numerals as those in Fig. 1 are assigned to the same elements as those shown in Fig. 1 and the following description will be mainly focused on the difference between the first and second embodiments.

In the second embodiment, regarding the motor 2 in the first embodiment as shown in Fig. 2, the internal air temperature sensor 17 is secured to the case 22 via an internal-air-temperature-detection-point heat insulating material 50 whose heat transfer coefficient is lower than that of the case 22. It is possible to prevent failures due to vibrations or the like and enhance reliability of the internal air temperature sensor 17 by directly securing the internal air temperature sensor 17 to the case 22 via the internal-air-temperature-detection-point heat insulating material 50. Furthermore, since the internal air temperature sensor 17 is secured to the case 22 via the internal-air-temperature-detection-point heat insulating material 50 whose heat transfer coefficient is lower than that of the case 22, the heat transmitted and received between the case 22 and the internal air temperature sensor 17 can be reduced and the temperature of the internal air 27 can be detected with a high degree of accuracy. In this way, both measurement accuracy and reliability of the internal air temperature sensor 17 can be achieved.

### <Third Embodiment>

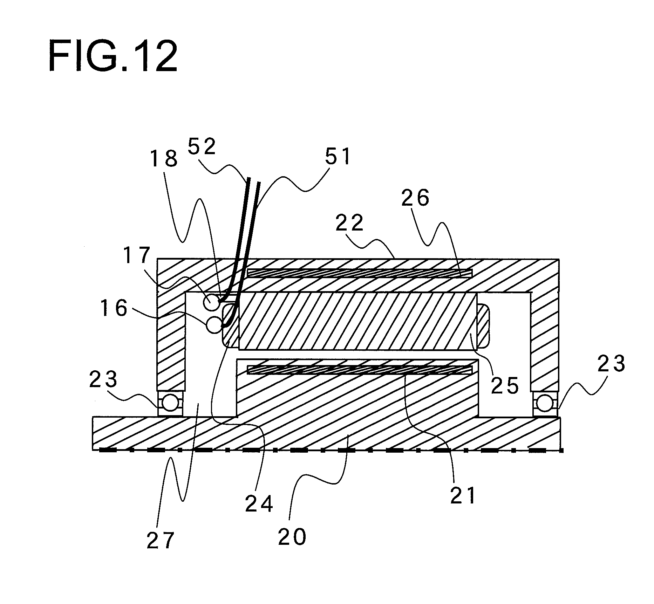

Fig. 12 is a diagram illustrating a schematic configuration of a motor 2 according to a third embodiment of the present invention. In the third embodiment, part of the configuration of the aforementioned first embodiment (the configuration of the motor 2) is changed. The same reference numerals as those in Fig. 1 are assigned to the same elements as those shown in Fig. 1 and the following description will be mainly focused on the difference between the first and third embodiments.

In the third embodiment, regarding the motor 2 in the first embodiment as shown in Fig. 2, the internal air temperature sensor 17 is attached to the stator 25 via the internal-air-temperature-detection-point support member 18. A space is provided between the internal air temperature sensor 17 and the stator 25 without having them directly contact each other, so that the temperature of the internal air 27 can be measured with a high degree of accuracy without being influenced by the temperature of the stator 25 and the temperatures of the rotor 20 and the magnet 21 can be estimated more highly accurately.

Furthermore, a coil temperature sensor signal line 51 which is a signal line of the coil temperature sensor 16 and an internal air temperature sensor signal line 52 which is a signal line of the internal air temperature sensor 17 can be integrated by attaching the internal air temperature sensor 17 to the stator 25, thereby making it possible to enhance assemblability of the motor 2.

Incidentally, in this embodiment, a ceramic structure is used as the internal-air-temperature-detection-point support member 18; however, instead of using this ceramic structure, the internal-air-temperature-detection-point support member 18 may be used as a signal line for transmitting measurement information of the internal air temperature sensor 17 and this signal line may be extended to attach the internal air temperature sensor 17 to the case 22 so that the internal air temperature sensor 17 will not directly contact the case 22.

### <Fourth Embodiment>

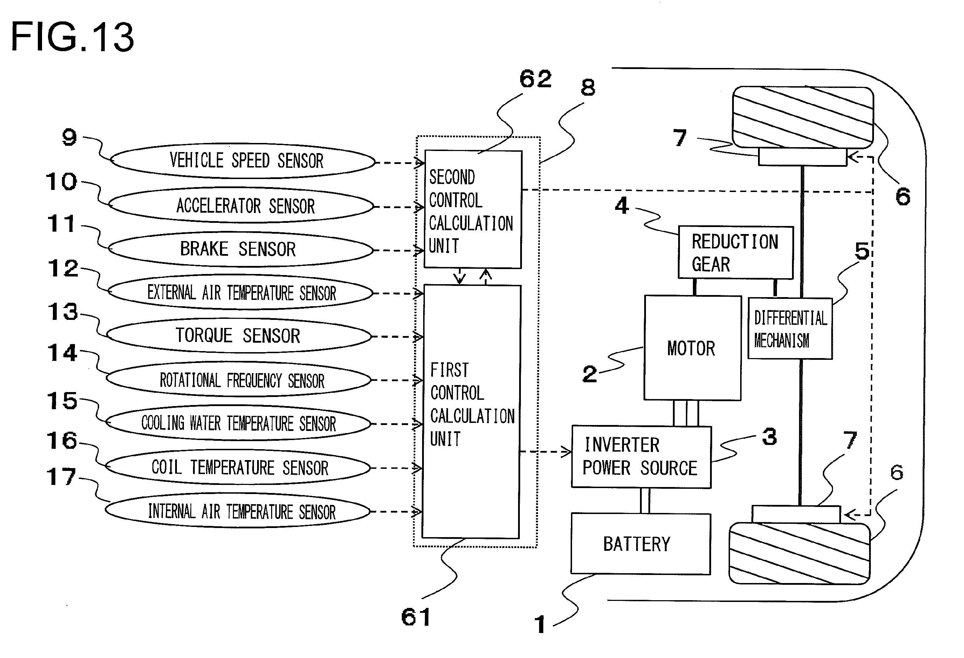

Fig. 13 is a diagram illustrating a schematic configuration of a motor drive device according to a fourth embodiment of the present invention. In the fourth embodiment, part of the configuration of the aforementioned first embodiment (the configuration of the control calculation unit 8) is changed. The same reference numerals as those in Fig. 1 are assigned to the same elements as those shown in Fig. 1 and the following description will be mainly focused on the difference between the first and fourth embodiments.

The control calculation unit 8 according to the fourth embodiment is composed of: a first control calculation unit 61 that calculates the size of an electric current applied to the motor 2 and a frequency of the alternating current; and a second control calculation unit 62 that calculates a torque command of the motor 2. The first control calculation unit 61 and the second control calculation unit 62 have separate CPUs and memories, respectively, and signals can be sent and received between the first control calculation unit 61 and the second control calculation unit 62.

The second control calculation unit 62 mainly performs calculations which do not depend on the motor 2. The second control calculation unit 62 is connected to the vehicle speed sensor 9, the accelerator sensor 10, the brake sensor 11, and so on. The second control calculation unit 62 calculates the torque command of the motor 2 and sends it to the first control calculation unit 61, and calculates the braking force command and sends it to the braking device 7.

The first control calculation unit 61 mainly executes calculations specific to the motor 2. The first control calculation unit 61 is connected to the external air temperature sensor 12, the torque sensor 13, the rotational frequency sensor 14, the cooling water temperature sensor 15, the coil temperature sensor 16, the internal air temperature sensor 17, and so on. The first control calculation unit 61 calculates the size of the electric current applied to the motor 2 and the frequency of the alternating current based on the torque command sent from the second control calculation unit 62 and sends a command to the inverter power source 3, and also calculates the temperatures of the rotor 20 and the magnet 21 and sends them to the second control calculation unit 62.

Therefore, the first control calculation unit 61 has the functions of the magnet temperature calculation unit 32 in Fig. 6 and the second control calculation unit 62 has the respective functions of the torque request calculation unit 30, the braking force request calculation unit 31, the torque limit calculation unit 33, the rotational frequency limit calculation unit 34, the torque command calculation unit 35, and the braking force command calculation unit 36 in Fig. 6.

Accordingly, program maintenability can be enhanced by employing the configuration in which execution parts are provided separately for the calculations specific to the motor 2 and for the calculations which do not depend on the motor 2. For example, when specifications of the vehicle are changed and properties of the motor 2 change, it is only necessary to modify only the first control calculation unit 61.

### REFERENCE SIGNS LIST

1 battery
2 motor
3 inverter power source
4 reduction gear
5 differential mechanism
6 drive wheels
7 braking device
8 control calculation unit
9 vehicle speed sensor
10 accelerator sensor
11 brake sensor
12 external air temperature sensor
13 torque sensor
14 rotational frequency sensor
15 cooling water temperature sensor
16 coil temperature sensor
17 internal air temperature sensor
18 internal-air-temperature-detection-point support member
20 rotor
21 magnet
22 case
23 bearing
24 coil
25 stator
26 cooling water
27 internal air
30 torque request calculation unit
31 braking force request calculation unit
32 magnet temperature calculation unit
33 torque limit calculation unit
34 rotational frequency limit calculation unit
35 torque command calculation unit
36 braking force command calculation unit
41 heat generation calculation unit
42 temperature calculation unit
43 coil temperature sensor failure judgment unit
44 internal air temperature sensor failure judgment unit
45 temperature correction unit
46 magnet temperature selection unit
50 internal-air-temperature-detection-point heat insulating material
51 coil temperature sensor signal line
52 internal air temperature sensor signal line
61 first control calculation unit
62 second control calculation unit

## Claims

1. A motor comprising:
a stator equipped with a coil;
a case that secures the stator;
a rotor supported by the case via a bearing; and
an internal air temperature detection unit that detects a temperature of internal air filling inside of the case.

2. The motor according to claim 1, wherein:
the internal air temperature detection unit includes:
a detection point support member that is secured to the case and extends from the case in a direction toward a space filled with the internal air; and
a temperature detection point located at a part of the detection point support member which is closer to the space and has a distance from the case.

3. The motor according to claim 1, wherein:
the internal air temperature detection unit is secured to the case via a heat insulating material.

4. The motor according to claim 1, further comprising:
a coil temperature detection unit that detects a temperature of the coil, wherein:
the internal air temperature detection unit includes:
a detection point support member that is secured to the stator and extends from the stator in a direction toward a space filled with the internal air; and
a temperature detection point located at a part of the detection point support member which is closer to the space and has a distance from the case.

5. A control device that controls driving of a motor, comprising:
an internal air temperature detecting means that detects a temperature of internal air filling inside of the motor, wherein:
driving of the motor is controlled based on a value detected by the internal air temperature detecting means.

6. The control device according to claim 5, further comprising:
a drive status acquisition means that acquires a drive status of the motor, wherein:
rotor temperature information of the motor is calculated based on a value acquired by the drive status acquisition means and the value detected by the internal air temperature detecting means; and
driving of the motor is controlled based on the calculated rotor temperature information.

7. A motor drive device comprising:
a motor; and
a control calculation unit that controls driving of the motor, wherein:
the motor includes a stator equipped with a coil, a case that secures the stator, a rotor supported by the case via a bearing, and an internal air temperature detection unit that detects a temperature of internal air filling inside of the case; and
the control calculation unit controls driving of the motor based on a value detected by the internal air temperature detection unit.

8. The motor drive device according to claim 7, wherein:
the control calculation unit calculates temperature information of the rotor based on a drive status of the motor and the value detected by the internal air temperature detection unit; and
driving of the motor is controlled based on the calculated rotor temperature information.

9. The motor drive device according to claim 8, wherein:
the motor includes a coil temperature detection unit that detects a temperature of the coil; and
the control calculation unit calculates the temperature information based on the drive status, the value detected by the internal air temperature detection unit, and a value detected by the coil temperature detection unit.

10. The motor drive device according to claim 9, wherein:
the control calculation unit includes a failure detection means that detects a failure of the internal air temperature detection unit; and
when the failure detection means detects the failure, the control calculation unit calculates the temperature information based on the drive status and the value detected by the coil temperature detection unit.

11. The motor drive device according to any one of claims 7 to 10, wherein:
the rotor includes a magnet; and
the temperature information is a temperature of the magnet.

12. The motor drive device according to claim 11, wherein:
when the temperature of the magnet calculated as the temperature information becomes equal to or more than a predetermined value, the control calculation unit reduces torque or rotational frequency of the motor.

13. The motor drive device according to any one of claims 7 to 12, wherein:
the drive status is torque and rotational frequency of the motor.

14. The motor drive device according to any one of claims 8 to 13, further comprising:
a first calculation unit that calculates the temperature information; and
a second calculation unit that calculates a torque command of the motor, wherein:
the temperature information is sent from the first calculation unit to the second calculation unit.

15. The motor drive device according to any one of claims 8 to 14, wherein:
the control calculation unit calculates the temperature information of the rotor by estimating a temperature value of each part of the motor including the rotor according to a flow of heat at the each part of the motor based on the drive status of the motor and correcting the estimated temperature value according to a difference between the estimated temperature value and the value detected by the internal air temperature detection unit.
